# EUROPEAN PATENT SPECIFICATION

(11) **EP 2 244 210 B1**
(45) Date of publication and mention of the grant of the patent: **20.11.2013**
(21) Application number: 10160583.0
(22) Date of filing: 21.04.2010
(51) Int. Cl.: G06K 19/077

(54) **RFID tag**
RFID-Etikett
Étiquette RFID

(30) Priority: 22.04.2009 JP 2009104129
(43) Date of publication of application: 27.10.2010
(73) Proprietor: FUJITSU LIMITED, Kawasaki-shi, Kanagawa 211-8588 (JP); Fujitsu Frontech Limited, Inagi-shi, Tokyo 206-8555 (JP)
(72) Inventor: Baba, Shunji, Kanagawa 211-8588 (JP); Hashimoto, Shigeru, Tokyo 206-8555 (JP); Niwata, Tsuyoshi, Tokyo 206-8555 (JP); Kawasaki, Yuusuke, Tokyo 206-8555 (JP)
(74) Representative: Kreutzer, Ulrich

(56) References cited:
- DE-A1- 19 824 643
- US-A1- 2005 093 677
- US-A1- 2005 108 912
- US-A1- 2007 222 601
- US-A1- 2008 022 503
- US-A1- 2008 122 704
- US-B1- 6 628 237
- US-B1- 7 197 649
- US-B2- 7 256 697

## Description

A certain aspect of the embodiments discussed herein is related to an RFID (Radio Frequency Identification) tag.

Recently, RFID tags have been widely utilized in the field of, for example, logistics, and there have been various proposals about RFID tags. The RFID tags are sometimes called IC (Integrated circuit) tags, and have the functions of storing various data and communicating with a reader/write for writing and reading data into and from the RFID tags using radio waves. The RFID tags should be configured to stably communicate with the reader/writer using radio waves.

There is a proposal taking the above into account (see Japanese Laid-Open Patent Publication No. 2006-338361). This proposal aims at realizing stabilized communications between the reader/write and the RFID tags even if a metal exists in proximity to the RFID tags. There is another proposal in which an RFID tag is twisted around an object so as to form a loop (see Japanese Laid-Open Patent Publication No. 2008-9537).

According to US 2007/0222601 A1, a passive type RFID tag held by a notch portion includes an antenna which has one end in a center thereof and is wound around several turns spirally in a rectangular form from the end, and an IC chip connected to the one end of the antenna, and the passive type RFID formed into the rectangular plate is accommodated and held in an accommodating member molded with a low magnetic permeability material.

According to US 7,197,649 B1, data are transferred to a media and from the media to a portable object by means of data exchange means integrated in said media and via exchange means integrated in a media reader, and the data exchange means integrated in the reader have a second antenna to secure an optical disk.

US 2005/0093677 A1 shows an RFID device comprising an antenna structure having electrically conductive material on both sides of an elongated slot; and a wireless communication device having a pair of contacts electrically coupled to respective parts of the conductive material; wherein the parts of conductive material are electrically coupled together at an end of the elongated slot distal from the wireless communication device.

There are many different shapes of products and goods managed by the RFID tags. Some shapes of products and goods do not allow an appropriate distance between the RFID tags and the reader/writer and do not realize stable communications using radio waves reliably.

It is an object of the present invention to provide an RFID tag that is mountable on an object and is reliable in stable communications with a device.

The invention is defined by claim 1. Preferred embodiments are set out in the dependent claims.

Among the drawings described hereafter, Figs. 2 and 6 illustrate the characterizing features of claim 1, whereas Figs. 4B and 8B give background information not forming part of the present invention. Figs. 4A, 5 and 8A illustrate embodiments of the invention.
FIG 1 is a perspective view of an RFID tag in accordance with a first embodiment;
FIG. 2 is a cross-sectional view taken along a line A-A illustrated in FIG. 1;
FIG 3 is a perspective view of a beverage can on which an RFID tag is mounted;
FIG 4A illustrates the RFID tag of the first embodiment mounted on the beverage can, and FIG 4B illustrates an RFID tag of a comparative example mounted on thebeverage can;
FIGs. 5A and 5B illustrate a method for manufacturing an RFID tag;
FIG. 6 is a cross-sectional view of an RFID tag in accordance with a second embodiment;
FIG. 7 is a perspective view of a bottle to which an RFID tag is mounted;
FIG. 8A illustrates the RFID tag of the second embodiment mounted on the bottle, and FIG. 8B illustrates an RFID tag of a comparative example mounted on the bottle;
FIG. 9 illustrates an RFID tag in accordance with another embodiment; and
FIG. 10 illustrates an RFID tag in accordance with a further embodiment.

A description will now be given of exemplary embodiments with reference to the accompanying drawings. It is to be noted that the sizes and ratios of structural elements illustrated in the figures may not coincide with those of the actual parts perfectly and that some details may be omitted.

### [First Embodiment]

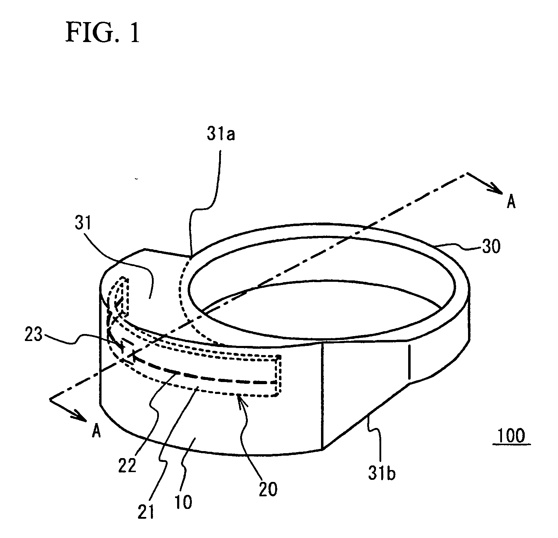

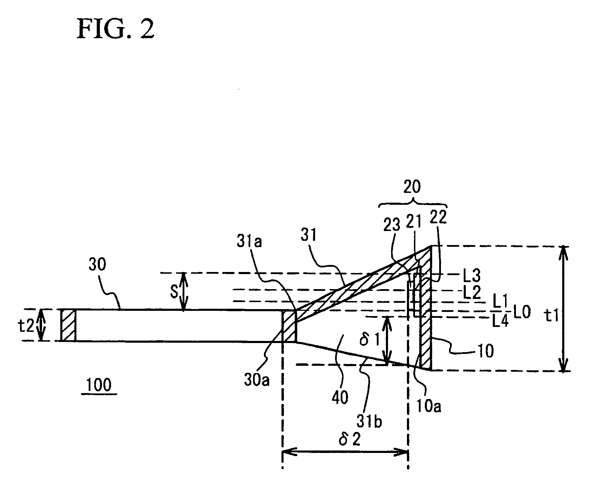

FIG. 1 is a perspective view of an RFID tag 100 in accordance with a first embodiment, and FIG. 2 is a cross-sectional view taken along a line A-A in FIG. 1. The RFID tag 100 an inlet (inlay) attachment portion 10 to which an inlet (inlay) 20 is attached. The RFID tag 100 has a ring-shaped mount portion 30, which is coupled with the inlet attachment portion 10 by means of a connecting portion 31, and is mounted on an object to which the RFID tag should be attached. As illustrated in FIG. 2, the inlet attachment portion 10 is disposed so as to define a hollow portion 40 between the ring-shaped mount portion 30 and the inlet attachment portion 10.

The RFID tag 100 has a built-in memory in which various data may be stored, and communicates with a reader/writer capable of writing and reading data into and from the built-in memory by using radio waves.

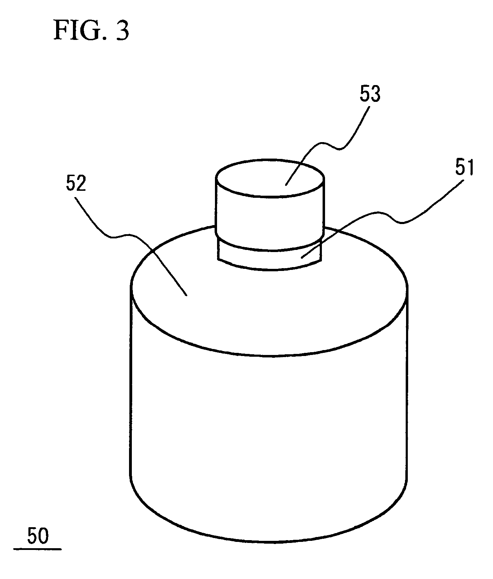

FIG. 3 is a perspective view of a beverage can 50, which is an exemplary one of the products and goods to which the RFID tag 100 may be attached. The beverage can 50 has a neck portion 51 to which a cap 53 is attached, and a shoulder portion 52 that continues to the neck portion 51. The diameter of the neck portion 51 is less than that of the shoulder portion 52. The shoulder portion 52 has a down slope that goes outwards. The RFID tag 100 is attached to the beverage can 50 so that the ring-shaped mount portion 30 is worn around the neck portion 51. A lower edge 31b of the ring-shaped mount portion 30 has a slope, which corresponds to the down slope of the shoulder portion 52. The RFID tag 100 is mounted on the beverage can 50 in the stable state. The ring-shaped mount portion 30 is not limited to the ring shape but may have another shape. For example, the ring-shaped mount portion 30 has a shape obtained by cutting off a part of a ring, such as a C shape. It can be said that such a C shape is a variation of the ring shape. The ring-shaped mount portion 30 may be varied so as to be shaped into a belt and be equipped with a length adjustment mechanism or a clamping mechanism.

As illustrated in FIGs. 1 and 2, the inlet (inlay) 20 has a substrate 21, an antenna 22 disposed on the substrate 21, and a circuit chip 23. The antenna 22 may be a dipole antenna or may be another type of antenna. The inlet (inlay) 20 is attached to an inner wall surface 10a of the inlet (inlay) attachment portion 10 having an arch shape. The inlet (inlay) 20 attached to the inlet attachment portion 10 is off-centered so that the upper edge of the inlet (inlay) 20 is positioned above the upper edge of the ring-shaped mount portion 30. The off-centered arrangement of the inlet (inlay) 20 is described below in detail.

In FIG. 2, a straight line indicated by a reference symbol L0 indicates the position of the upper edge of the ring-shaped mount portion 30. A connecting point 31 a via which the ring-shaped mount portion 30 and the connecting portion 31 are connected is located on the straight line L0. A straight line indicated by a reference symbol L1 indicates the position of the lower edge of the antenna 22. A straight line indicated by a reference symbol L2 indicates the position of the upper edge of the antenna 22. A straight line indicated by a reference symbol L3 indicates the position of the upper edge of the inlet 20, more particularly, the position of the upper edge of the substrate 21. A straight line indicated by a reference symbol L4 indicates the position of the lower edge of the inlet, more particularly, the position of the lower edge of the substrate 21.

As illustrated in FIG. 2, the inlet 20 of the RFID tag 100 of the first embodiment is off-centered so that the upper edge L3 of the inlet 20 is positioned above the upper edge L0 of the ring-shaped mount portion 30. The off-centered distance is indicated by a reference symbol S. The off-centered arrangement of the inlet (inlay) 20 with the distance S makes it possible to obtain a large distance δ1 between the lower edge of the inlet (inlay) 20 and the lower edge 31b of the connecting portion 31. The lower edge 31b of the connecting portion 31 is brought into contact with the shoulder portion 52 of the beverage cap 50. Thus, a large distance between the inlet (inlay) 20 and the shoulder portion 52 can be obtained.

In the RFID tag 100 of the first embodiment, the thickness of the inlet attachment portion 10 in the vertical direction is larger than that of the ring-shaped mount portion 30 in the vertical direction. In FIG. 2, a reference symbol t1 indicates the thickness of the inlet attachment portion 10 in the vertical direction. In FIG. 2, a reference symbol t2 indicates the thickness of the ring-shaped mount portion 30 in the vertical direction. By defining the large thickness t1 of the inlet attachment portion 10, it is possible to obtain a large space for arranging the inlet 20 in the off-centered formation in the inlet attachment portion 10. That is, the RFID tag 100 configured in accordance with the first embodiment facilitates off-centering of the inlet (inlay) 20 by securing the large thickness of the inlet attachment portion 10 in the vertical direction.

Since the RFID tag 100 has the connecting portion 31, it is possible to secure a large distance δ2 between an inner wall surface 30a of the ring-shaped mount portion 30 and the inlet (inlay) 20.

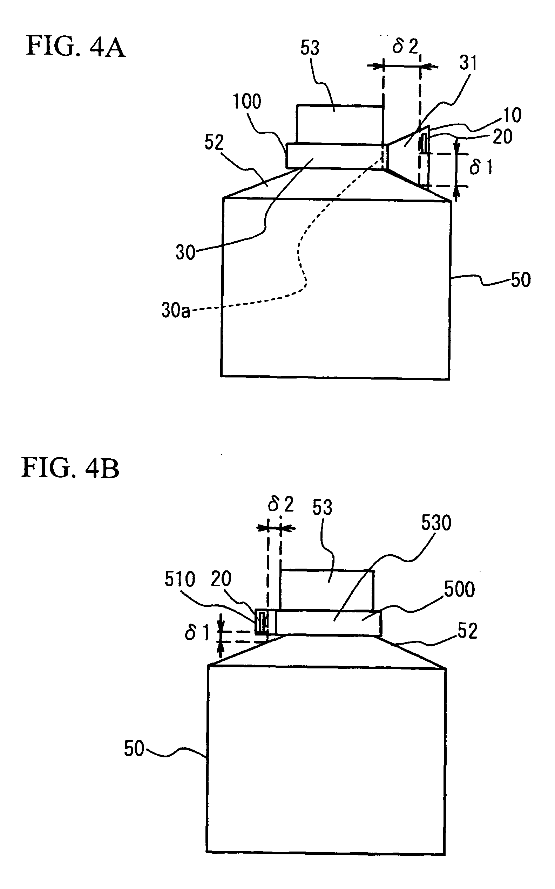

A further description will now be given of the distances δ1 and δ2 with reference to FIGs. 4A and 4B. FIG. 4A illustrates the beverage can 50 to which the RFID tag 100 of the first embodiment has been attached. FIG 4B illustrates a comparative example in which an RFID tag 500 is attached to the beverage can 50.

The RFID tag 500 of the comparative example has a ring-shaped mount portion 530 and an inlet (inlay) attachment portion 510. In this regard, the RFID tag 500 is similar to the RFID tag 100 of the first embodiment. However, the RFID tag 500 of the comparative example is configured so that the thickness of the ring-shaped mount portion 530 in the vertical direction and the thickness of the inlet attachment portion 510 in the vertical direction are the same as each other. Thus, the inlet (inlay) 20 attached to the inlet (inlay) attachment portion 510 is not off-centered with respect to the ring-shaped mount portion 530. Thus, the RFID tag 500 has a difficulty in securing the large distance δ1. On the contrary, a certain level of the distance δ2 may be obtained by keeping the inlet (inlay) attachment portion 510 far away from the ring-shaped mount portion 530. However, this arrangement causes the inlet (inlay) attachment portion 510 to be far away from the shoulder portion 52 of the beverage can 50, and may degrade the stable mounting of the RFID tag 500.

In contrast, the RFID tag 100 of the first embodiment is configured so that the inlet 20 having the same size as that of the comparative example is off-centered to obtain the large distance δ1. It is thus possible to reliably realize the stable communications with another device such as the reader/writer. Further, even in a case where the connection portion 31 is extended to obtain the larger distance δ2, since the shape of the lower edge 31b of the connecting portion 31 has a counterpart to that of the shoulder portion 52, the RFID tag 100 is mounted on the beverage can 50 in the stabilized state.

If the neck portion 51 or shoulder portion 52 of the beverage can 50 made of a metal has a small distance to the inlet 20, the stable communications may be degraded due to interference between radio waves or the like. Since the RFID tag 100 of the first embodiment realizes the large distances δ1 and δ2, an increased degree of freedom of setting the distances δ1 and δ2 is realized and stabilized communications are realized.

The distances δ1 and δ2 may be selected appropriately taking the communication distance to the reader/writer into consideration. For example, the communication distance may be increased for every odd-number multiple of 1/4 of the wavelength λ of the radio wave used for communications, that is, λ(2n+1)/4 (n=0, 1, 2, ...).

The RFID tag 100 of the first embodiment has the hollow portion 40. Thus, it is possible to restrain energy loss of electromagnetic waves due to dielectric loss and to realize stabilized communications.

The thickness t2 of the ring-shaped mount portion 30 of the RFID tag 100 in the vertical direction is less than the thickness t1 of the inlet (inlay) attachment portion 10 in the vertical direction. Thus, the cap 53 is exposed and is thus held easily. It is thus possible to easily pick up the beverage can 50 with the RFID tag 100 being mounted thereon.

The products and goods with the RFID tag 100 may be arranged and displayed so that the neck portions may be turned sideways or downwards. The RFID tag 100 may be applied to the products and goods in any states. The RFID tag 100 may be suitably applied to objects having column shapes with neck portions and shoulder portions. In any object, the inlet 20 (inlay) of the RFID tag 100 is off-centered and is adequately away from the object.

The inlet 20 is attached to the inlet attachment portion 10 as follows. The inlet (inlay) 20 is bonded by the inner wall surface 10a of the inlet (inlay) attachment portion 10 by an adhesive. A two-sided tape may be substituted for the adhesive.

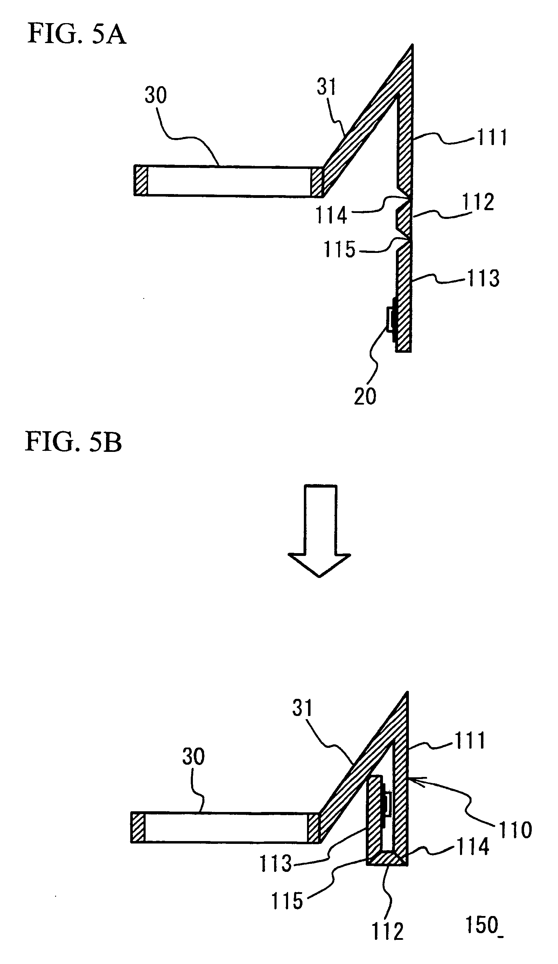

FIGs. 5A and 5B illustrate an RFID tag 150 that employs an attachment method for attaching the inlet 20 to the inlet (inlay) attachment portion 110. Referring to FIG. 5A, a plate member is provided as a part of the connecting portion 31. The plate member has a first portion 111, a second portion 112 and a third portion 113 defined by cutoff portions 114 and 115. The inlet (inlay) 20 is bonded to the third portion 113 located on the leading end of the connecting portion 31. Then, as illustrated in FIG. 5B, the plate member is bent at the cutoff portions 114 and 115 so that the first portion 111 and the third portion 113 face each other. The method as illustrated in FIGs. 5A and 5B enables the inlet 20 to be easily attached to the inlet (inlay) attachment portion 110.

### [Second Embodiment]

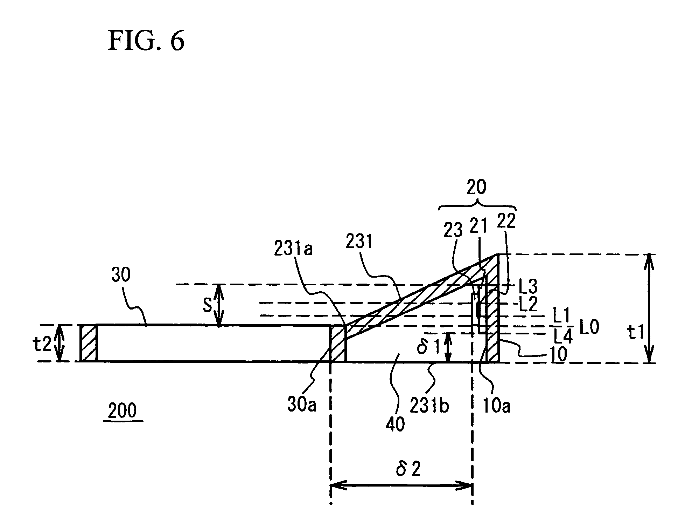

A second description is now described with reference to FIGS. 6, 7, 8A and 8B. FIG. 6, which corresponds to FIG 2 in the first embodiment, is a cross-sectional view of an RFID tag 200 in accordance with the second embodiment.

The RFID tag 200 differs from the RFID tag 100 of the first embodiment in that the RFID tag 200 has a lower edge 231b of a connecting portion 231. In the first embodiment, as has been described previously, the lower edge 31b of the connecting portion 31 has the slope that corresponds to the slope of the shoulder portion 52 of the beverage can 50. In contrast, the lower edge 231b of the RFID tag 200 is flush with the lower edge of the ring-shaped mount portion 30. In the cross section of FIG. 6, the lower edge 231b of the RFID tag 200 is aligned with the lower edge of the ring-shaped mount portion 30. The other structures of the RFID tag 200 are the same as those of the RFID tag 100. The parts of the RFID tag 200 that are the same as those of the RFID tag are given the identical reference numerals, and a description thereof is omitted here.

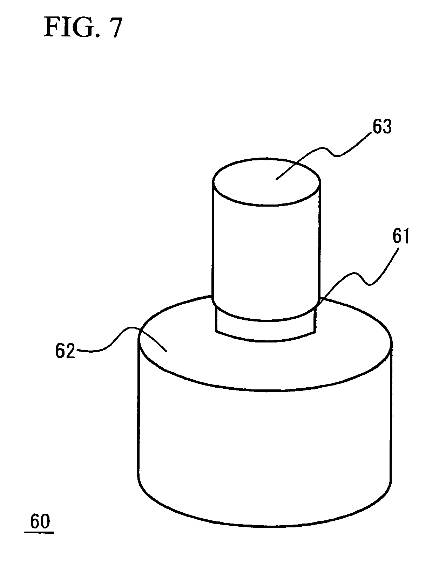

The shape of the RFID tag 200 matches the shape of an object on which the RFID tag 200 is mounted. FIG. 7 is a perspective view of a bottle 60 made of glass. The bottle 60 has a neck portion 61 to which a cap 63 is attached, and a shoulder portion 62 continuing to the neck portion 61. The diameter of the neck portion 61 is less than that of the shoulder portion 62. The shoulder portion 62 extends horizontally. The bottle 60 may be used to store a liquid such as a cosmetic liquid.

The RFID tag 200 is mounted on the bottle 60 in such a way that the ring-shaped mount portion 30 is worn around the neck portion 61. The lower edge 231b of the connecting portion 231 is shaped so as to have a counterpart to that of the shoulder portion 62. Thus, the RFID tag 200 may be mounted on the bottle 60 in the stabilized state.

As in the case of the RFID tag 100, the RFID tag 200 is configured so that the inlet (inlay) 20 is attached to the inner wall surface 10a of the inlet (inlay) attachment portion 10. The inlet (inlay) 20 is off-centered to the inlet (inlay) attachment portion 10 so that the upper edge of the inlet (inlay) 20 is located above the upper edge of the ring-shaped mount portion 30.

Reference symbols L0 through L4 in FIG. 6 indicate positions similar to those indicated by the reference symbols L0 through L4 used in FIG. 2.

As illustrated in FIG. 6, the inlet (inlay) 20 of the RFID tag 200 is off-centered so that the upper edge L3 is located above the upper edge L0 of the ring-shaped mount portion 30. The off-centered distance is indicated by a reference symbol S in FIG. 6. The off-centered distance S of the inlet 20 enables a large distance δ1 between the lower edge of the inlet 20 and the lower edge 231b of the connecting portion 231. The lower edge 231b of the connecting portion 231 is brought into contact with the shoulder portion 62 of the bottle 60. It is thus possible to obtain a large distance between the inlet 20 and the shoulder portion 62.

As in the case of the RFID tag 100 of the first embodiment, the RFID tag 200 of the second embodiment is configured so that the thickness of the inlet attachment portion 10 in the vertical direction is larger than that of the ring-shaped mount portion 30 in the vertical direction. The reference symbol t1 indicates the thickness of the inlet attachment portion 10 in the vertical direction, and the reference symbol t2 indicates the thickness of the ring-shaped mount portion 30 in the vertical direction. The large thickness t1 of the inlet attachment portion 10 results in a space used to position the inlet 20 in the off-centered arrangement. The large thickness t1 of the inlet (inlay) attachment portion 10 realizes the off-centered arrangement of the inlet (inlay) 20 more easily.

Since the RFID tag 200 has the connecting portion 231, it is possible to obtain a large distance δ2 between the inner wall surface 30a of the ring-shaped mount portion 30 and the inlet 20.

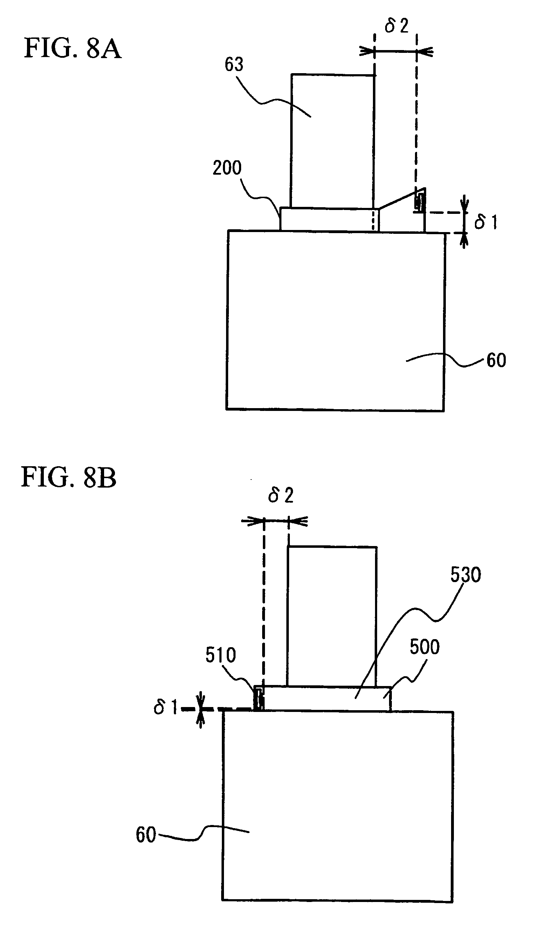

The distances δ1 and δ2 are now described with reference to FIGS. 8A and 8B. FIG. 8A illustrates the RFID tag 200 mounted on the bottle 60, and FIG. 8B illustrates the RFID tag 500 of the comparative example mounted on the bottle 60.

The RFID tag 500 of the comparative example is equipped with a ring-shaped mount portion 530 and an inlet (inlay) attachment portion 510. In this regard, the RFID tag 500 is similar to the RFID tag 200 of the second embodiment. However, the RFID tag 500 of the comparative example is configured so that the thickness of the ring-shaped mount portion 530 in the vertical direction is equal to that of the inlet attachment portion 510 in the vertical direction. Thus, the inlet 20 attached to the inlet attachment portion 510 is not off-centered with respect to the ring-shaped mount portion 530. As a result of this arrangement, the RFID tag 500 does not have a large distance δ1. The shoulder portion 62 of the bottle 60 extends horizontally unlike the shoulder portion 52 of the beverage can 50. It is further difficult to obtain the sufficient distance δ1, as compared to the beverage can 50.

The RFID tag 200 is configured so that the inlet (inlay) 20 having the same size as that of the comparative example is off-centered to obtain the large distance δ1. It is thus possible to realize stable communications with another device such as the reader/writer. The RFID tag 200 is mounted on the bottle 60 in the stabilized stable state.

Stable communications may be broken due to interference of radio waves in a case where there is a short distance between the inlet 20 and the neck portion 61 or shoulder portion 62 of the bottle 60, particularly, the shoulder portion 62. The RFID tag 200 realizes stable communications with the reader/writer and has a large degree of freedom of setting the distances δ1 and δ2, because the RFID tag 200 has the large distances δ1 and δ2.

As in the case of the first embodiment, the distances δ1 and δ2 in the second embodiment may be selected appropriately taking the communication distance to the reader/writer into consideration. For example, the communication distance may be increased for every odd-number multiple of 1/4 of the wavelength λ of the radio wave used for communications, that us, λ(2n+1)/4 (n=0, 1, 2, ...).

The RFID tag 200 of the second embodiment has the hollow portion 40 between the ring-shaped mount portion 30 and the inlet (inlay) attachment portion 10. Thus, it is possible to restrain energy loss of electromagnetic waves due to dielectric loss and to realize stable communications.

The thickness t2 of the ring-shaped mount portion 30 of the RFID tag 200 in the vertical direction is less than the thickness t1 of the inlet attachment portion 10 in the vertical direction. Thus, the cap 63 is exposed and is thus held easily. It is thus possible to easily pick up the bottle 60 with the RFID tag 200 being mounted thereon.

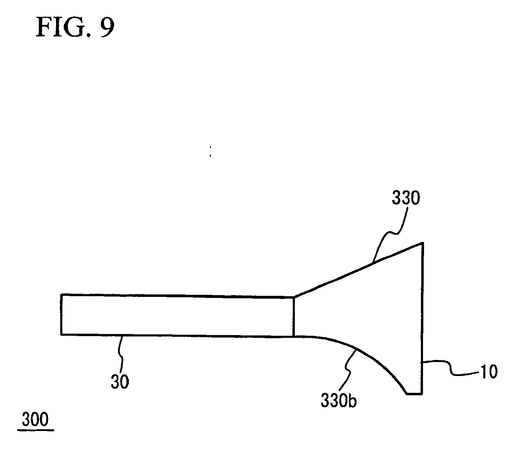

The shape of the lower edge of the connecting portion 231 may be varied appropriately taking into consideration the shape of the object to which the RFID tag is attached. For example, an RFID tag 300 illustrated in FIG. 9 is equipped with a connecting portion 330 having an arch-shaped lower edge 330b, which corresponds to the shape of an object on which the RFID tag 300 is mounted. In any object, the inlet 20 of the RFID tag 100 is off-centered and is away from the object, while the lower edge of the connecting portion is formed in a shape that depends on the shape of the object.

### [Third Embodiment]

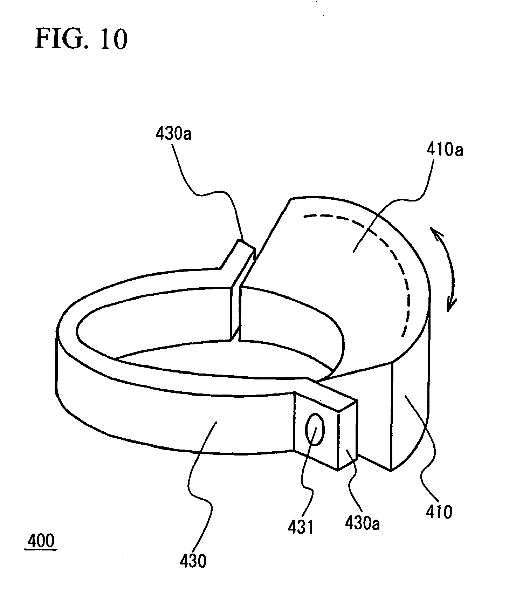

An RFID tag 400 of a third embodiment is now described with reference to FIG. 10, which is a perspective view of the RFID tag 400.

The RFID tag 400 has a connecting portion 410, which is connected to a C-shaped mount portion 430 by means of a rotating unit. The C-shaped mount portion 430 is another exemplary structure of the ring-shaped mount portion. The connecting portion 410, in which an inlet (inlay) attachment portion 410a, is incorporated is a member separate from the C-shaped mount portion 430. The connecting portion 410 is rotatably attached to flange portions 430a formed at ends of the C-shaped mount portion 430 by pins 431, as indicated by a double-headed arrow in FIG. 10. Since the connecting portion 410 is rotatably attached to the C-shaped mount portion 430, the RFID tag 400 may be mounted on the object in the stabilized state. The angle of the connecting portion 410 to the C-shaped mount portion 430 may be adjusted taking the shape of the object to which the RFID tag 400 is attached into consideration. The adjustment of the angle increases the degree of attachment of the RFID tag 400 to the object and stabilizes the attachment state.

The flange portions 430a and the pins 431 form an exemplary structure of the rotating unit. Another structure of the rotating unit may be employed to rotatably attach the connecting portion 410 to the C-shaped mount portion 430.

## Claims

1. An RFID tag comprising:
- a substrate (21), an antenna (22) formed on the substrate, and a circuit chip (23) connected to the antenna;
- an attachment portion (10; 410a) to which the substrate (21) is attached; and
- a mount portion (30; 430) having a ring shape or a C shape for wearing around a bottleneck,
**characterized in that**
- the attachment portion (10; 410a) is configured to have a hollow portion (40) for accommodating the substrate (21),
- the antenna (22) is not located between a first plane and a second plane, wherein
- the first plane and the second plane respectively pass through a first edge and a second edge of the mount portion (30; 430),
- and said first plane, said second plane, said first edge and said second edge are perpendicular to an axis of the bottleneck.

2. The RFID tag according to claim 1, wherein the attachment portion (10; 410a) has a thickness in a direction larger than that of the mount portion (30; 430) in the same direction.

3. The RFID tag according to claim 1 or 2, further comprising a connecting portion (410) that is connected to the attachment portion (410a) and is rotatably attached to the mount portion (430).

4. The RFID tag according to claim 2
**characterized in that**
- a projection of the antenna onto a plane which cuts edges which define said thickness of the attachment portion has a distance to edges defining said thickness of said mount portion.

## Patentansprüche

1. RFID-Tag, umfassend:
- ein Substrat (21), eine auf dem Substrat gebildete Antenne (22) und einen mit der Antenne verbundenen Schaltungschip (23);
- einen Befestigungsabschnitt (10; 410a), an dem das Substrat (21) befestigt ist; und
- einen Anbauabschnitt (30, 430) mit einer Ringform oder einer C-Form zum Umgeben eines Engpasses,
**dadurch gekennzeichnet, dass**
- der Befestigungsabschnitt (10; 410a) eingerichtet ist, einen Hohlabschnitt (40) zum Aufnehmen des Substrats (21) aufzuweisen,
- die Antenne (22) nicht zwischen einer ersten Ebene und einer zweiten Ebene lokalisiert ist, wobei
- die erste Ebene und die zweite Ebene durch eine erste Kante bzw. eine zweite Kante des Anbauabschnitt (30; 430) laufen,
- und die erste Ebene, die zweite Ebene, die erste Kante und die zweite Kante senkrecht zu einer Achse des Engpasses sind.

2. RFID-Tag nach Anspruch 1, wobei der Befestigungsabschnitt (10; 410a) eine Dicke in einer Richtung größer als diejenige des Anbauabschnitt (30; 430) in der gleichen Richtung aufweist.

3. RFID-Tag nach Anspruch 1 oder 2, weiterhin umfassend einen Verbindungsabschnitt (410), der mit dem Befestigungsabschnitt (410a) verbunden ist und rotierbar in dem Anbauabschnitt (430) befestigt ist.

4. RFID-Tag nach Anspruch 2,
**dadurch gekennzeichnet, dass**
- eine Projektion der Antenne auf eine Ebene, die Kanten ausschneidet, die die Dicke des Befestigungsabschnitts definieren, eine Distanz zu Kanten aufweist, die die Dicke des Anbauabschnitt definiert.

## Revendications

1. Etiquette RFID comprenant :
- un substrat (21), une antenne (22) formée sur le substrat, et une puce électronique (23) connectée à l'antenne ;
- une partie de fixation (10 ; 410a) à laquelle est fixé le substrat (21) ; et
- une partie de montage (30 ; 430) ayant une forme annulaire ou une forme en C pour être portée autour d'un goulot de bouteille,
**caractérisée en ce que**
- la partie de fixation (10 ; 410a) est configurée de façon à présenter une partie creuse (40) pour recevoir le substrat (21),
- l'antenne (22) n'est pas située entre un premier plan et un deuxième plan, où
- le premier plan et le deuxième plan passent respectivement par un premier bord et un deuxième bord de la partie de montage (30 ; 430),
- et ledit premier plan, ledit deuxième plan, ledit premier bord et ledit deuxième bord sont perpendiculaires à un axe du goulot de bouteille.

2. Etiquette RFID selon la revendication 1, dans laquelle la partie de fixation (10 ; 410a) a une épaisseur, dans une certaine direction, qui est plus grande que celle de la partie de montage (30 ; 430) dans la même direction.

3. Etiquette RFID selon la revendication 1 ou 2, comprenant en outre une partie de connexion (410) qui est connectée à la partie de fixation (410a) et qui est fixée de manière rotative sur la partie de montage (430).

4. Etiquette RFID selon la revendication 2,
**caractérisée en ce que**
- une projection de l'antenne sur un plan qui coupe les bords qui définissent ladite épaisseur de la partie de fixation a une distance jusqu'aux bords qui définit ladite épaisseur de ladite partie de montage.
